# EUROPÄISCHE PATENTANMELDUNG

(11) **EP 4 434 865 A1**
(43) Veröffentlichungstag der Anmeldung: **25.09.2024**
(21) Anmeldenummer: 24164900.3
(22) Anmeldetag: 20.03.2024
(51) Int. Cl.: B62K 21/00, B66D 1/34, B62K 7/04

(54) **SEILZUG-LENKSCHEIBE**

(30) Priorität: 24.03.2023 DE 202023101480 U
(71) Anmelder: RTI Sports GmbH, 56070 Koblenz (DE)
(72) Erfinder: Wilts, Jelte, 53121 Bonn (DE)
(74) Vertreter: dompatent von Kreisler Selting Werner - Partnerschaft von Patent- und Rechtsanwälten mbB

(57) **Zusammenfassung**

Eine Seilzug-Lenkscheibe für eine Fahrrad-Lenkeinrichtung weist eine Halteeinrichtung (50) zum Verbinden mit einem Lenkschaft und/oder einem Gabelschaft auf. Die Halteeinrichtung ist teilweise von einem Führungselement (52) für Lenkzugpaare umgeben. Das Führungselement (52) weist Fixierelemente (64) zum Fixieren der Enden (62) der Lenkzugpaare auf. Ferner ist ein Spannelement (66) vorgesehen, das insbesondere verschiebbar mit dem Führungselement (52) verbunden ist und zum Spannen des Lenkzugpaars dient.

## Beschreibung

Die Erfindung betrifft eine Seilzuglenkscheibe für eine Fahrrad-Lenkeinrichtung.

Bei Fahrrädern, insbesondere bei Lasten-Fahrrädern, ist eine Aufnahmebox für Lasten, wie Personen oder Güter gegebenenfalls zwischen einem Lenker und einem Vorderrad angeordnet. Es ist daher erforderlich, die Lenkbewegung auf das Vorderrad zu übertragen. Dies erfolgt beispielsweise über ein Gestänge. Dies hat jedoch den Nachteil, dass Gestänge gegebenenfalls verbiegen können und die Kraftübertragung über Gelenke im Gestänge erfolgen muss. Ferner besteht bei der Verwendung von Gegenständen der Nachteil, dass über ein Gestänge nur ein eingeschränkter Lenkwinkel realisiert werden kann und Gestänge zu Geräuschentwicklungen neigen.

Ferner weist das Vorsehen von Gestängen den wesentlichen Nachteil auf, dass hierfür häufig unter dem Rahmen ein entsprechend großer Bauraum vorgesehen sein muss. Hierdurch ist die realisierbare Bodenfreiheit stark beschränkt.

Es ist ferner bekannt die Lenkbewegung auf das Vorderrad über Seilzüge zu übertragen. Derartige Seilzüge oder dergleichen weisen ein Lenkzugpaar auf, wobei je nach Lenkrichtung eine Zugkraft von jeweils einem der beiden Lenkzüge des Lenkzugpaars übertragen wird. Dies ist hierin begründet, dass durch derartige Lenkzüge nur Zugkräfte und keine Druckkräfte übertragen werden können. Lenkzüge weisen jedoch den Nachteil auf, dass diese sich aufgrund der Krafteinwirkung längen können und insofern ein Spannen oder Nachjustieren der Lenkzüge erforderlich ist.

Eine Spanneinrichtung für Lenkzüge ist aus einem in US 4,838,568 beschriebenen Liegerad bekannt. Hierin ist beschrieben, dass die Lage von Umlenkrollen des Seilzugs zum Spannen des Seilzugs veränderbar ist. Eine derartige Spann- bzw. Justagevorrichtung kann jedoch nur bei Lenkzugpaaren mit Umlenkrollen vorgesehen werden.

Des Weiteren ist es aus DE19734849 bekannt, bei einer Lenkung für ein Sitz- oder Liegerad innerhalb des Lenkzuges ein Spannelement vorzusehen, durch das die Länge des Zuges selbst verändert wird.

Aufgabe der Erfindung ist es, eine Seilzug-Lenkscheibe zu schaffen, mit der ein einfaches und zuverlässiges Spannen bzw. Justieren der Lenkzüge möglich ist.

Die Lösung der Aufgabe erfolgt erfindungsgemäß durch eine Seilzug-Lenkscheibe gemäß Anspruch 1.

Die erfindungsgemäße Seilzug-Lenkscheibe ist insbesondere für Fahrradlenkeinrichtungen geeignet. Besonders geeignet ist die erfindungsgemäße Seilzug-Lenkeinrichtung für Lastenräder, bei denen die Lenkung über Seilzüge erfolgt. Die erfindungsgemäße Seilzug-Lenkscheibe, die häufig auch als Lenkrolle bezeichnet wird, weist eine Halteeinrichtung zum Verbinden mit einer Lenkerstange und/oder einem Gabelschaft auf. Die Halteeinrichtung dient hier vorzugsweise zum unmittelbaren Verbinden mit einer Lenkerstange und/oder einem Gabelschaft. Die Halteeinrichtung trägt die Lenkscheibe und verbindet diese mittelbar oder unmittelbar mit dem Gabelschaft oder dem Lenkschaft. Insbesondere umgibt im montierten Zustand die Seilzug-Lenkscheibe den Lenkschaft und/oder den Gabelschaft zumindest teilweise. Ferner weist die Seilzug-Lenkscheibe ein die Halteeinrichtung zumindest teilweise umgebendes Führungselement für ein Lenkzugpaar auf. Das Führungselement weist beispielsweise einander gegenüberliegende Rillen auf, wobei in den Rillen jeweils ein Bowdenzug angeordnet ist. Hierbei kann ein Lenkzugpaar vorgesehen sein. Gegebenenfalls sind für jede Lenkrichtung zwei Lenkzüge vorgesehen, so dass zwei Lenkzugpaare vorgesehen sind. Hierdurch ist ein redundantes System geschaffen und vermieden, dass beispielsweise beim Reißen eines Bowdenzugs ein Lenken nicht mehr möglich ist.

Ferner weist die erfindungsgemäße Seilzug-Lenkscheibe je Lenkzug ein Fixierelement auf. Beim Vorsehen von zwei oder mehreren Lenkzugpaaren können ein oder mehr Fixierelemente vorgesehen sein oder einzelne Fixierelemente zur Fixierung mehrerer Lenkzüge ausgebildet sein. Die vorzugsweise zwei Fixierelemente sind am Führungselement vorgesehen oder fest mit dem Führungselement verbunden. Somit wird eine auf einen Lenkzug aufgebrachte Zugkraft über das Fixierelement an das Führungselement und von diesem an die Halteeinrichtung übertragen. Da die Halteeinrichtung in montiertem Zustand mit dem Lenkschaft und/oder mit dem Gabelschaft verbunden ist, erfolgt hierdurch das Übertragen der Lenkbewegung.

Erfindungsgemäß ist ein Spannelement vorgesehen, das auf die Lenkzüge einwirkt. Das Spannelement ist erfindungsgemäß mit dem Führungselement beweglich verbunden. Durch ein Bewegen des Spannelements erfolgt somit ein Spannen der Lenkzüge. Besonders bevorzugt ist es hierbei, dass ein einziges Spannelement für ein Lenkzugpaar vorgesehen ist, wobei es beim Vorsehen mehrerer Lenkzugpaare bevorzugt ist, dass insbesondere sämtliche Lenkzugpaare durch ein einziges Spannelement gespannt werden. Durch das Anordnen des Spannelements an dem Führungselement ist eine einfache und kompakte Bauweise realisiert. Da das Spannelement unmittelbar auf die Lenkzüge einwirkt und in vorteilhafter Ausführungsform unabhängig von der Befestigung der Lenkzüge am Führungselement ist, ist ferner eine kostengünstige Seilzug-Lenkscheibe mit Spannelement realisiert.

Das Spannelement ist zum Spannen der Lenkzüge beweglich mit dem Führungselement verbunden. Beispielsweise kann das Spannelement exzentrisch ausgebildet sein, so dass durch Verdrehen des Spannelements ein Spannen der Lenkzüge erfolgt. Vorzugsweise ist das Spannelement zum Spannen der Lenkzüge verschiebbar mit dem Führungselement verbunden, so dass durch Verschieben des Spannelements ein Spannen der Lenkzüge erfolgt.

Das verschiebbare Spannelement weist in bevorzugter Ausführungsform einen Ansatz auf, der in einen am Führungselement vorgesehenen Führungsschlitz greift. Hierdurch ist eine definierte und klare Führung realisiert. Insbesondere weist das Spannelement zwei vorzugsweise einander gegenüberliegende Ansätze auf, die jeweils in einen Führungsschlitz eingreifen, um eine definierte Führung zu realisieren oder beispielsweise ein Verkippen oder Verklemmen des Spannelements zu vermeiden. Ebenso ist es möglich, dass die Ansätze am Führungselement und die entsprechenden Schlitze am Spannelement vorgesehen sein können. Auch entsprechende Kombinationen dieser beiden Ausführungsvarianten sind möglich.

Vorzugsweise weist das Spannelement eine Spannfläche auf, an der die Lenkzüge anliegen. Auch durch das Vorsehen einer Spannfläche, die ggf. konvex gekrümmt ist, ist ein insbesondere flächiges Anliegen der Lenkzüge bzw. das Anliegen der Lenkzüge an einer vorgegebenen Länge von insbesondere 1 - 2 cm und somit eine zuverlässige Kraftübertragung realisiert. Ferner wirkt in bevorzugter Ausführungsform das Spannelement mit einem Spannmittel zur Lageveränderung des Spannelements zusammen. Bei einem exzentrisch ausgebildeten Spannelement kann es sich beispielsweise bei dem Spannmittel um eine Schraube handeln, die beispielsweise zum Verdrehen des exzentrisch ausgebildeten Spannelements gelöst und anschließend wieder fixiert wird. Da das Spannelement in bevorzugter Ausführungsform zum Spannen verschiebbar ist, ist das Spannmittel vorzugsweise derart ausgebildet, dass es ein Verschieben des Spannelements bewirkt. Hierbei kann das Spannelement beispielsweise als Feder ausgebildet sein, so dass auf Grund der Federkraft ein automatisches Verschieben des Spannelements und somit ein automatisches Spannen der Lenkzüge erfolgt. Das Spannelement kann auch als Spannschraube ausgebildet sein, so dass durch Drehen der Spannschraube ein Verschieben des Spannelements zur Lageveränderung des Spannelements und somit zum Spannen der Lenkzüge erfolgt. Bevorzugt ist es hierbei, dass das Spannmittel, insbesondere die Spannschraube, mit dem Führungselement und dem Spannelement verbunden ist. Beispielsweise kann an dem Spannelement oder dem Führungselement ein Gewinde vorgesehen sein und ein beispielsweise kopfförmiger Ansatz des Spannmittels am Führungselement oder am Spannelement anliegen. Ein Drehen eines derartig ausgebildeten Spannmittels bewirkt sodann ein Verschieben des Spannelements relativ zum Führungselement und somit die erforderliche Verschiebung des Spannelements zum Spannen der Lenkzüge.

Vorzugsweise werden die beiden Lenkzüge eines Lenkzugpaars an einander gegenüberliegenden Außenseiten des Führungselements, insbesondere in Führungsrillen, geführt. Die Außenseiten des Führungselements sind hierbei vorzugsweise konvex gekrümmt. Des Weiteren ist es bevorzugt, dass sich die beiden Lenkzüge, die insbesondere an einander gegenüberliegenden Seiten des Führungselements geführt sind, im Bereich des Spannelements, insbesondere an der Spannfläche, kreuzen. Hierbei weisen die beiden Lenkzüge eines Lenkzugpaars vorzugsweise einen Abstand zueinander auf, so dass sich diese auch im Bereich, in dem sie sich kreuzen, nicht berühren. Insofern verläuft in bevorzugter Ausführungsform ein Lenkzug, der beispielsweise an einer linken Außenseite des Führungselements geführt ist, entlang des Spannelements, insbesondere der Spannfläche, zu einem auf der gegenüberliegenden, d.h. rechten Seite angeordneten Fixierelement. Entsprechend verläuft ein auf der rechten Seite geführter Lenkzug zunächst an der rechten Außenseite des Führungselements entlang, um sodann entlang des Spannelements, insbesondere der Spannfläche, zu einem auf der rechten Seite angeordneten Fixierelement zu verlaufen. Somit kreuzen sich die beiden Lenkzüge im Bereich des Spannelements, wenngleich sie insbesondere in horizontaler, d.h. in Axialrichtung der Drehachse der Fahrradgabel oder des Lenkschafts, einen Abstand zueinander aufweisen. Vorzugsweise sind die beiden Fixierelemente einander gegenüberliegend am Führungselement angeordnet bzw. mit diesem fest verbunden. Hierbei ist es besonders bevorzugt, dass das Spannelement in einem Bereich zwischen den beiden Fixierelementen angeordnet ist.

Beim Vorsehen von mehreren Lenkzugpaaren, insbesondere zwei Lenkzugpaaren, besteht der Vorteil, dass ein redundantes System ausgebildet ist. Hierbei ist es besonders bevorzugt, das auch die weiteren Lenkzugpaare von demselben Spannelement gespannt werden, so dass ein einziges Spannelement beispielsweise für zwei Lenkzugpaare, d.h. vier Lenkzüge, vorgesehen ist. Die jeweiligen Lenkzugpaare kreuzen sich in bevorzugter Ausführungsform im Bereich des Spannelements insbesondere an der Spannfläche des Spannelements.

Die einzelnen Lenkzüge mehrerer Lenkzugpaare können unabhängig voneinander am Führungselement fixiert sein. Bevorzugt ist das Vorsehen eines Fixierelements für mehrere Lenkzüge, so dass beispielsweise zwei Fixierelemente vorgesehen sind, die jeweils mehrere Lenkzüge unterschiedlicher Lenkzugpaare aufnehmen.

In einer bevorzugten Weiterbildung der Erfindung ist ferner eine Justageeinrichtung vorgesehen. Diese dient zur Anzeige eines erfolgten Nachspannens der Lenkzüge. Hierbei kann die Justageeinrichtung vorzugsweise ein an dem Spannelement, insbesondere einem Ansatz des Spannelements, angeordnetes Zeigerelement aufweisen. Dies wirkt mit einer, insbesondere am Fixierelement vorgesehenen, Skala zusammen. Insofern ist auf einfache Weise auf Grund des Verschiebens des Zeigerelements relativ zur Skala sichtbar, wie weit die Lenkzüge nachgespannt wurden. Insofern ist es auf einfache Weise möglich, festzustellen, wann die Lenkzüge ausgewechselt werden müssen oder wann die Lenkzüge beispielsweise an dem gegenüberliegenden Ende durch ein ggf. dort vorgesehenes herkömmliches Spannelement gespannt werden müssen. Als weitere Spannelement kann ein übliches Spannelement wie es bei Bowdenzugbremsen üblich ist vorgesehen werden.

Nachfolgend wird die Erfindung anhand einer bevorzugten Ausführungsform unter Bezugnahme auf die anliegenden Zeichnungen näher erläutert.

Es zeigen:
Fig. 1 eine schematische perspektivische Seitenansicht eines Lastenfahrrads,
Fig. 2 eine schematische perspektivische Draufsicht einer an einem Lenkschaft fixierten erfindungsgemäßen Seilzug-Lenkscheibe,
Fig. 3 eine perspektivische Draufsicht der in Fig. 2 dargestellten Seilzug-Lenkscheibe,
Fig. 4 eine schematische Draufsicht der in Fig. 2 dargestellten Seilzug-Lenkscheibe und
Fig. 5 eine schematische Schnittansicht entlang der Linie V-V in Fig. 4.

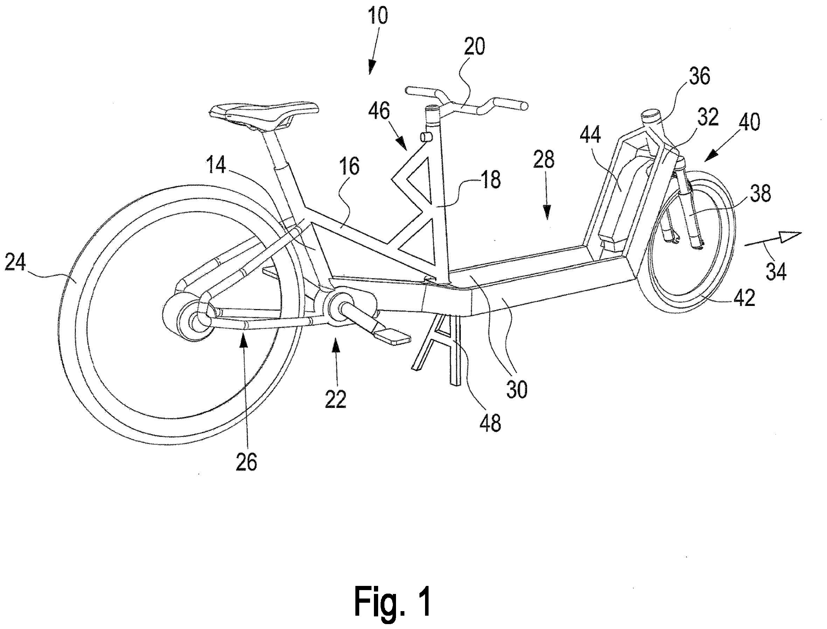

Eine bevorzugte Ausführungsform des erfindungsgemäßen Lastenfahrrads wie in Figur 1 dargestellt weist einen Lastenfahrrad-Rahmen 10 auf. Der Lastenfahrrad-Rahmen 10 weist im dargestellten Ausführungsbeispiel ein Sattelrohr 14, ein Unterrohr 16 sowie ein Lenkrohr 18 auf. In dem Lenkrohr 18 ist ein schwenkbares Rohr angeordnet, das mit einem Lenker 20 verbunden ist. Ferner ist zwischen dem Unterrohr 16 und dem Sattelrohr 14 im dargestellten Ausführungsbeispiel eine Antriebseinrichtung 22 angeordnet. Diese weist ein herkömmliches Tretlager auf, das mit einem Elektromotor verbunden ist, so dass das Treten von einem Elektromotor unterstützt werden kann. Der Antrieb eines Hinterrades 24 erfolgt über einen üblichen hier nicht dargestellten Antrieb mittels Kette, Zahnriemen oder dergleichen. Ferner weist der Lastenfahrrad-Rahmen 10 einen Hinterbau 26 auf, der das Hinterrad 24 trägt. In dem dargestellten Ausführungsbeispiel ist ein einspuriges Lastenfahrrad dargestellt.

Ferner weist der Fahrradrahmen 10 ein Tragelement 28 auf. Das Tragelement 28 weist im dargestellten Ausführungsbeispiel zwei horizontale Rahmenelemente 30 auf, die mit dem Unterrohr 16 sowie dem Lenkrohr 18 verbunden sind. Mit den beiden horizontal verlaufenden Rahmenelementen 30 sind zwei im dargestellten Ausführungsbeispiel in Fahrtrichtung 34 steigend verlaufende Gabelelemente 32 angeordnet. Diese sind im Bereich eines Gabelschafts 36 miteinander und mit diesem verbunden. Der Gabelschaft 36 ist Teil eines ferner auch die Gabel 38 umfassenden Gabelelements 40, welches im dargestellten Ausführungsbeispiel ein Vorderrad 42 trägt.

Eine Batterie 44 kann mit dem Tragelement 28 verbunden sein. Im dargestellten Ausführungsbeispiel ist die Batterie 44 zwischen den beiden Gabelelementen 32 des Tragelements angeordnet. Ferner kann die Batterie 44 oder eine weitere Batterie zwischen den beiden Rahmenelementen 30 angeordnet sein.

Mit dem Lenkrohr 18 ist ein Griffelement 46 verbunden. Im dargestellten Ausführungsbeispiel ist das Griffelement an einer Rückseite des Lenkrohrs 18 angeordnet und weist in Richtung des Hinterbaus 26 bzw. in Richtung des Sattelrohrs 14. Das Griffelement 46 ist somit in der Rahmenmittelebene angeordnet, in der beim dargestellten Lastenfahrrad auch die beiden Räder sowie das Sattelrohr 14, das Unterrohr 16 und das Lenkrohr 18 angeordnet sind.

Um das Lastenrad anzuheben oder beispielsweise auf einen Hauptständer 48 zu heben, kann der Nutzer insbesondere am oberen Teil 46 des Griffelements angreifen.

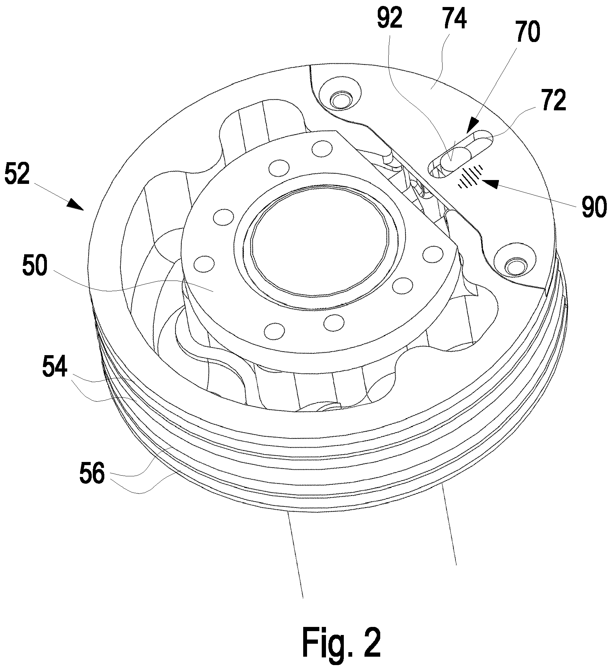

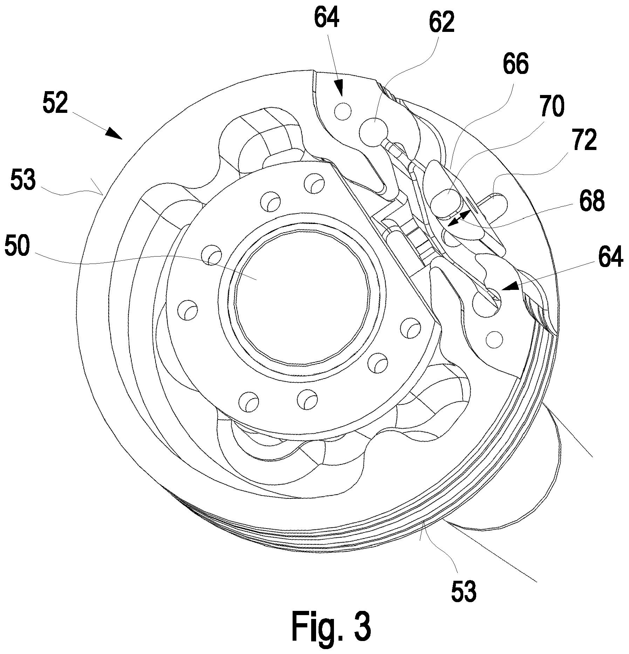

Die in den Figuren 2 bis 5 dargestellte Ausführungsform der Seilzug-Lenkscheibe kann entweder mit dem Lenkschaft oder dem Gabelschaft verbunden sein, wobei es auch möglich ist, dass sowohl mit dem Lenkschaft als auch mit dem Gabelschaft eine entsprechende Seilzug-Lenkscheibe verbunden ist. Der Lenkschaft ist im Lenkrohr 18 angeordnet und mit dem Lenker 20 verbunden. Der Gabelschaft 36 ist mit der Gabel 38 verbunden und im Gabelrohr angeordnet.

Die Verbindung der erfindungsgemäßen Seilzug-Lenkscheibe mit dem Lenkschaft oder dem Gabelschaft erfolgt über eine Halteeinrichtung 50. Hierbei kann ein kraft- und/oder formschlüssiges Verbinden über die Halteeinrichtung 50 erfolgen. Die Halteeinrichtung 50 ist mit dem Führungselement 52 fest verbunden. Das Führungselement 52 ist im dargestellten Ausführungsbeispiel teilringförmig ausgebildet und weist an seiner Außenseite zwei Rillenpaare 54,56 auf. Jedes Rillenpaar 54,56 dient zur Aufnahme jeweils zweier Lenkzüge eines Lenkzugpaars 58 und 60. Die Lenkzüge weisen an den Enden verdickte Ansätze, wie Nippel 62, auf. Diese werden in Fixierelementen 64 angeordnet. Die Fixierelemente 64 sind im dargestellten Ausführungsbeispiel jeweils aus Bohrungen im Führungselement 52 ausgebildet, wobei die Bohrungen einen Schlitz aufweisen, durch den die Lenkzüge 58,60 geführt sind. Die Fixierelemente 64 sind fest mit dem Führungselement 52 verbunden oder als entsprechende Ausnehmungen in diesem vorgesehen.

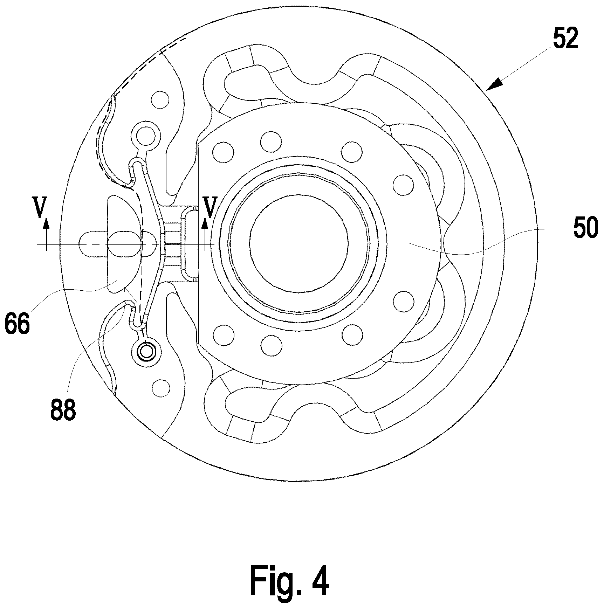

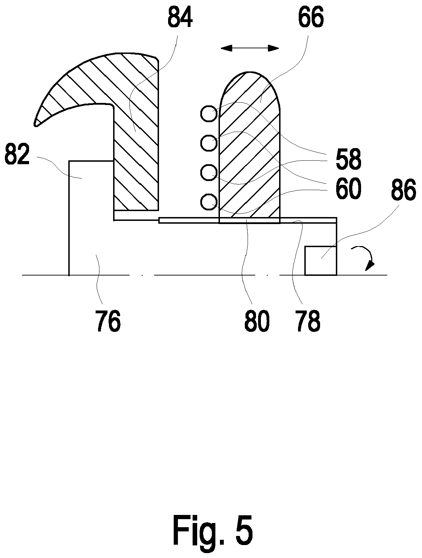

Zum Spannen der Lenkzugpaare 58,60 ist ein Spannelement 66 vorgesehen. Dies ist im dargestellten Ausführungsbeispiel derart ausgebildet und angeordnet, dass es im Wesentlichen senkrecht zur Längsrichtung der Lenkzüge 58,60 in Richtung eines Pfeils 68 verschiebbar ist. Hierzu weist das Spannelement zwei einander gegenüberliegende Ansätze 70 auf, die in Schlitzen 72 des Führungselements 52 oder einer mit dem Führungselement 52 verbundenen Abdeckplatte 74 (Fig. 2) angeordnet sind. Zum Verschieben des Spannelements 66 ist ein Spannmittel 76 vorgesehen, bei dem es sich im dargestellten Ausführungsbeispiel um eine Spannschraube (Fig. 5) handelt. Ein Gewinde 78 der Spannschraube 76 greift in eine im Spannelement 66 vorgesehene Gewindebohrung 80 ein. Ein Kopf- oder Anlageelement 82 des als Schraube ausgebildeten Spannmittels 76 ist auf einer Rückseite eines Anlageelements 84 angeordnet. Das Anlageelement 84 ist Teil des Führungselements 52 oder fest mit diesem verbunden. Zum Drehen des Spannmittels 76 weist dieses an der dem Kopf 82 gegenüberliegenden Seite eine Öffnung mit einem Innensechskant 86, einen Schlitz o.dgl. auf. Durch Drehen des als Schraube ausgebildeten Spannmittels 76 erfolgt somit ein Verschieben des Spannelements 66 in Richtung des Pfeils 78. Hierdurch werden die Lenkzüge 58,60, die an einer konkav gekrümmten Spannfläche 88 (Fig. 4) des Spannelements 66 anliegen, gespannt.

Auf einer Oberseite des Abdeckelements 74 (Fig. 2) kann eine Skala 90 vorgesehen sein. Über die Skala 90 kann mit Hilfe einer Markierung, wie einem Strich oder einem anderen Zeigerelement 92, auf einfache Weise abgelesen werden, um wieviel die Seilzüge 58,60 nachgespannt wurden.

## Patentansprüche

1. Seilzug-Lenkscheibe für Fahrrad-Lenkeinrichtungen, mit
einer Halteeinrichtung (50) zum Verbinden mit einem Lenkschaft und/oder einem Gabelschaft,
einem die Halteeinrichtung (50) teilweise umgebenden Führungselement (52) für ein Lenkerpaar (58,60),
einem Fixierelement (64) je Lenkzug (58,60), wobei die Fixierelement (64) am Führungselement (52) vorgesehen und/oder fest mit dem Führungselement (52) verbunden sind, und
einem auf die Lenkzüge (58,60) einwirkenden Spannelement (66), das mit dem Führungselement (52) bewegbar verbunden ist.

2. Seilzug-Lenkscheibe nach Anspruch 1, **dadurch gekennzeichnet, dass** das Spannelement (66) zum Spannen der Lenkzüge (58,60) verschiebbar mit dem Führungselement (52) verbunden ist.

3. Seilzug-Lenkscheibe nach Anspruch 2, **dadurch gekennzeichnet, dass** das Spannelement (66) und/oder das Führungselement (52) einen Ansatz (70) aufweist, der an einem am Führungselement (52) und/oder am Spannelement (66) vorgesehenen Führungsschlitz (72) greift.

4. Seilzug-Lenkscheibe nach einem der Ansprüche 1 - 3 **dadurch gekennzeichnet, dass** das Spannelement (66) eine Spannfläche (88) aufweist, an der die Lenkzüge (58,60) anliegen.

5. Seilzug-Lenkscheibe nach einem der Ansprüche 1 - 4, **dadurch gekennzeichnet, dass** das Spannelement (66) mit einem Spannmittel (76) zur Lageveränderung insbesondere Verschiebung des Spannelements (67) zusammenwirkt.

6. Seilzug-Lenkscheibe nach Anspruch 5, **dadurch gekennzeichnet, dass** das Spannmittel (76) mit de Führungselement (52) und dem Spannelement 66 verbunden ist.

7. Seilzug-Lenkscheibe nach einem der Ansprüche 1 - 6, **dadurch gekennzeichnet, dass** die beiden Lenkzüge eines Lenkzugpaars (58,60) an einander gegenüberliegenden Außenseiten (53) des Führungselements (52), insbesondere im Führungsrillen (54,56) geführt sind.

8. Seilzug-Lenkscheibe nach einem der Ansprüche 1 - 7, **dadurch gekennzeichnet, dass** sich die beiden Lenkzüge eines Lenkzugpaars (58,60) im Bereich des Spannelements (66), insbesondere an der Spannfläche (68), kreuzen.

9. Seilzug-Lenkscheibe nach einem der Ansprüche 1 - 8, **dadurch gekennzeichnet, dass** die beiden Fixierelemente (64) einander gegenüberliegend angeordnet sind.

10. Seilzug-Lenkscheibe nach Anspruch 9, **dadurch gekennzeichnet, dass** das Spannelement (66) in einem Bereich zwischen den beiden Fixierelementen (64) angeordnet ist.

11. Seilzug-Lenkscheibe nach einem der Ansprüche 1 - 10, **dadurch gekennzeichnet, dass** zwei Lenkzugpaare (58,60) vorgesehen sind.

12. Seilzug-Lenkscheibe nach Anspruch 11, **dadurch gekennzeichnet, dass** die beiden Lenkzugpaare (58,60) mit einem gemeinsamen Spannelement (66) zum Spannen zusammenwirken.

13. Seilzug-Lenkscheibe nach Anspruch 11 oder 12, dass jedes Fixierelement (64) zwei Lenkzüge fixiert.

14. Seilzug-Lenkscheibe nach einem der Ansprüche 1 - 13, **dadurch gekennzeichnet, dass** mittels einer Justageeinrichtung eine Anzeige der erfolgten Nachspannung erfolgt, wobei die Justageeinrichtung vorzugsweise ein an dem Spannelement (66), insbesondere dem Ansatz (70) des Spannelements (66) angeordnetes Zeigerelement (92) aufweist, das mit einer, insbesondere am Fixierelement (52,74) vorgesehenen Skala (90) zusammenwirkt.
